(19) Europäisches Patentamt
European Patent Office
Office européen des brevets

(11) Veröffentlichungsnummer : **0 367 957 B1**

(12) # EUROPÄISCHE PATENTSCHRIFT

(45) Veröffentlichungstag der Patentschrift : **08.01.92 Patentblatt 92/02**

(51) Int. Cl.$^5$ : **C22B 3/32,** C01G 55/00, B01J 31/40

(21) Anmeldenummer : **89117510.1**

(22) Anmeldetag : **22.09.89**

(54) **Verfahren zur Rückgewinnung von Rhodium.**

(30) Priorität : **01.10.88 DE 3833427**

(43) Veröffentlichungstag der Anmeldung : **16.05.90 Patentblatt 90/20**

(45) Bekanntmachung des Hinweises auf die Patenterteilung : **08.01.92 Patentblatt 92/02**

(84) Benannte Vertragsstaaten : **AT DE ES FR GB IT SE**

(56) Entgegenhaltungen :
**DE-A- 3 626 536**
**GB-A- 1 283 389**
**US-A- 3 251 646**
**US-A- 3 547 964**

(73) Patentinhaber : **HOECHST AKTIENGESELLSCHAFT**
**Postfach 80 03 20**
**W-6230 Frankfurt am Main 80 (DE)**

(72) Erfinder : **Weber, Jürgen, Dr. Dipl.-Chem.**
**Bunsenstrasse 17**
**W-4200 Oberhausen 11 (DE)**
Erfinder : **Bexten, Ludger, Dr. Dipl.-Chem.**
**Im Freihof 9**
**W-4224 Hünxe (DE)**
Erfinder : **Kupies, Dieter**
**Burgfeld 143**
**W-4100 Duisburg 14 (DE)**
Erfinder : **Lappe, Peter, Dr. Dipl.-Chem.**
**Eickenhof 34**
**W-4220 Dinslaken (DE)**
Erfinder : **Springer, Helmut, Dipl.-Ing.**
**Borbecker Strasse 19**
**W-4200 Oberhausen 11 (DE)**

**EP 0 367 957 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Rückgewinnung von Rhodium aus Rhodiumkomplexverbindungen und gegebenenfalls Komplexliganden enthaltenden wäßrigen Lösungen.

Die Rhodiumkomplexverbindungen bilden zusammen mit überschüssig eingesetzten Komplexliganden unter anderem ein Katalysatorsystem das — wie in der DE-PS 2627354 beschrieben — zur Hydroformylierung von Olefinen eingesetzt wird. Das Katalysatorsystem bildet sich unter Reaktionsbedingungen aus Rhodium und wasserlöslichen organischen Phosphinen, die im Überschuß eingesetzt werden. Seine Wasserlöslichkeit beruht auf der Anwesenheit von Sulfonsäuregruppen, die in den organischen Phosphinen vorhanden sind. Die Phosphor-Liganden werden bevorzugt als Alkali-, Ammonium- oder Erdalkalisulfonat verwendet.

Bei längerem Gebrauch des Katalysatorsystems nimmt die Selektivität der Umsetzung ab. Diese Selektivitätsminderung ist zum einen auf das Einwirken von Katalysatorgiften, wie Eisencarbonyl, das sich durch Einwirken von Kohlenmonoxid auf die und des Reaktors bilden kann, und auf höhersiedende, sich aus den Aldehyden bildende Kondensationsprodukte und zum anderen auf die Verringerung des überschüssig eingesetzten sulfonierten Phosphins durch Oxidation zu Phosphinoxiden oder Abbau zu aromatischen Sulfonsäuren zurückzuführen. Daneben entstehen aus den Phosphinen und den im Synthesegas enthaltenen Schwefelverbindungen wie auch durch Reduktion von Sulfonsäuregruppen auch Phosphinsulfide.

Da weder Phosphinoxide noch Phosphinsulfide noch aromatische Sulfonsäuren im Hydroformylierungskatalysator erwünscht sind, ist es erforderlich, die verbrauchte Katalysatorlösung zu ersetzen. Aus Gründen der Wirtschaftlichkeit ist es notwendig, aus dieser Katalysatorlösung das Rhodium abzutrennen und zurückzugewinnen.

Von entscheidender Bedeutung ist dabei, daß das Rhodium möglichst vollständig in einer Form, die eine Wiederverwendung als Katalysatorkomponente gestattet, anfällt.

Aus der DE-OS 3626536 ist ein Verfahren zur Rückgewinnung von Rhodium aus wäßrigen, Rhodiumkomplexverbindungen enthaltenden Lösungen bekannt, wobei der Lösung ein wasserlösliches Salz einer Carbonsäure mit 7 bis 22 Kohlenstoffatomen im Überschuß bezogen auf Rhodium zusetzt, darauf die Lösung bei 50 bis 200°C mit einem Oxidationsmittel behandelt und das abgeschiedene Rhodium abtrennt. Auf diese Weise können etwa 90 bis 95% des in der Lösung vorhandenen Rhodiums wiedergewonnen werden. Als Oxidationsmittel dienen alternativ Sauerstoff, Luft oder Wasserstoffperoxid. Es hat sich jedoch gezeigt, daß die Rückgewinnungsquote in nicht unerheblichem Maße auch von der Art der Lösung abhängt. Vermutlich treten infolge von Alterung und in Abhängigkeit von der Beanspruchung der Losung als Katalysator in nicht vorhersehbarer Weise Veränderungen auf, die einer problemlosen Rhodiumrückgewinnung entgegenstehen.

Die nicht zurückgewonnenen Rhodiumanteile kann man allerdings nur unter großem Aufwand, beispielsweise durch Oxidation bei hohen Temperaturen und Drücken oder thermische Zersetzung, falls erforderlich unter Zuhilfenahme eines Trägermaterials wie Aktivkohle, worauf Rh abgeschieden wird, abtrennen. Bei diesem Verfahren fällt das Rhodium jedoch entweder als Metall oder in Form von Verbindungen an, die sich nicht mehr unmittelbar als Katalysatorkomponente, insbesondere für eine Hydroformylierung, einsetzen lassen.

Der vorliegenden Erfindung liegt die Aufgabe zugrunde, die vorstehend aufgeführten Nachteile zu beseitigen und das Rhodium auf einfache Weise möglichst weitgehend aus der wäßrigen Lösung zurückzugewinnen. Zugleich soll gewährleistet sein, daß das Rhodium in einer für einen Wiedereinsatz als Katalysator brauchbaren Form erhalten wird.

Diese Aufgabe wird überraschenderweise gelöst durch ein Verfahren zur Rückgewinnung von Rhodium aus Rhodiumkomplexverbindungen und gegebenenfalls Komplexliganden enthaltenden wäßrigen Lösungen, durch Behandlung der Lösung mit einem Oxidationsmittel in Gegenwart eines wasserlöslichen Salzes einer Carbonsäure mit 7 bis 22 Kohlenstoffatomen im Überschuß, bezogen auf Rhodium, und Abtrennung des Rhodiums als eine im Wasser unlösliche Verbindung. Es ist dadurch gekennzeichnet, daß die wäßrige Lösung bei 20 bis 120°C mit Wasserstoffperoxid oder einer Wasserstoffperoxid bildenden Substanz und mit Sauerstoff oder einem sauerstoffhaltigen Gas behandelt wird.

Die erfindungsgemäße Arbeitsweise eignet sich allgemein zur Rückgewinnung von Rhodium aus in Wasser gelösten Rhodiumkomplexen, die z.B. als Katalysatorlösung bei der Hydroformylierung von Olefinen verwendet werden, insbesondere zur Abtrennung von Rhodium aus gebrauchten, weitgehend desaktivierten Katalysatorlösungen, wie sie nach längerem Einsatz in der Hydroformylierung von Olefinen anfallen.

Mit Hilfe des Verfahrens gelingt es, das allgemein in geringer Konzentration vorliegende Rhodium mit überraschend hoher Selektivität und Ausbeute aus der wäßrigen Lösung abzutrennen. Das derart zurückgewonnene Rhodium kann als Katalysatorbestandteil unmittelbar verwendet werden.

Die dem Rückgewinnungsverfahren zugeführten Lösungen enthalten den Rhodiumkomplex, gegebenenfalls überschüssigen Komplexliganden sowie dessen Abbau- und Umwandlungsprodukte in Wasser gelöst.

Der Rhodiumkomplex entspricht der allgemeinen Formel $HRh(CO)_xL_{4-x}$, wobei L für wasserlösliche Komplexliganden steht und x den Zahlen 1 bis 3 entspricht. Bei den wasserlöslichen Komplexliganden handelt es sich insbesondere um Phosphine der Formel

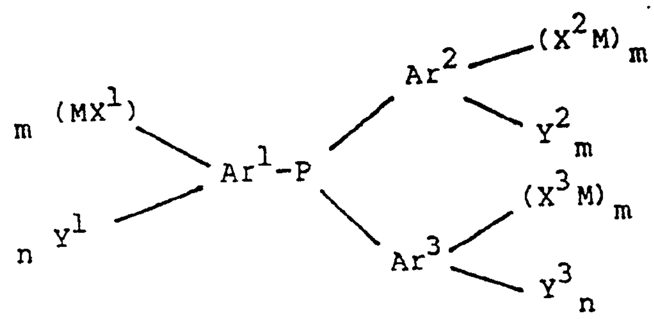

Hierin steht $Ar^1$, $Ar^2$ und $Ar^3$ jeweils für eine Phenyl- oder Naphthylgruppe, $Y^1$, $Y^2$, $Y^3$ jeweils für eine geradkettige oder verzweigte Alkylgruppe mit 1 bis 4 C-Atomen, eine Alkoxygruppe, ein Halogenatom, eine HO-, CN-, $NO_2$- oder $R^1R^2N$-Gruppe, in der $R^1$ und $R^2$ jeweils eine geradkettige oder verzweigte Alkylgruppe mit 1 bis 4 C-Atomen ist; $X^1$, $X^2$, $X^3$ bedeutet jeweils einen Carboxylat-(COO-) und/oder Sulfonat-($SO_3$-)-Rest, $n_1$, $n_2$, $n_3$ sind gleiche oder verschiedene ganze Zahlen von 0 bis 5, M stellt ein Alkalimetallion, das Äquivalent eines Erdalkalimetall- oder Zinkions oder ein Ammonium- oder quartäres Alkylammoniumion der allgemeinen Formel $N(R^3R^4R^5R^6)^+$ dar, in der $R^3$, $R^4$, $R^5$, $R^6$ jeweils eine geradkettige oder verzweigte Alkylgruppe mit 1 bis 4 C-Atomen ist, und $m_1$, $m_2$, $m_3$ sind gleiche oder verschiedene ganze Zahlen von 0 bis 3, wobei mindestens eine Zahl $m_1$, $m_2$ oder $m_3$ gleich oder größer als 1 ist.

Das Rhodium liegt in einer Konzentration von 10 bis 2000, insbesondere von 30 bis 350, bevorzugt von 50 bis 250 Gew.-ppm, vor. Die wäßrige Lösung enthält 0,5 bis 15, insbesondere 0,7 bis 8, bevorzugt 0,8 bis 4,0 Gew.-% wasserlöslichen Komplexliganden bezogen auf wäßrige Lösung. Daneben befinden sich in der Lösung noch Abbau- und Umwandlungsprodukte des wasserlöslichen Komplexliganden. Hierzu gehören organische Substituenten enthaltende Phosphinoxide und Phosphinsulfide, Sulfonsäuren, Phosphinsäuren, Carbonsäuren und deren Salze. Ihre Konzentration beträgt 1 bis 15, insbesondere 3 bis 12, bevorzugt 5 bis 10 Gew.-% bezogen auf wäßrige Lösung.

Der Salzrückstand, berechnet als Trockensubstanz, beträgt 1,5 bis 30, insbesondere 4,0 bis 20, bevorzugt 6,0 bis 18 Gew.-%, bezogen auf wäßrige Lösung. Unter Salzrückstand versteht man die Summe aller salzartigen Bestandteile, d.h. den Rhodiumkomplexliganden und dessen Abbau- und Umwandlungsprodukte.

Im Falle eines Hydroformylierungskatalysators weist die wäßrige Lösung insgesamt 0,15 bis 4,0, insbesondere 0,8 bis 3,0, bevorzugt 1,0 bis 1,5 Gew.-% organische Bestandteile, bezogen auf wäßrige Lösung, auf. Hierunter fallen eingesetztes Olefin, Aldehyde, Alkohole, Aldole, Kondensationsprodukte und gegebenenfalls Lösungsvermittler.

Den Lösungsvermittlern fällt die Aufgabe zu, die physikalischen Eigenschaften der Grenzflächen zwischen der organischen, Olefin enthaltenden und der wäßrigen Katalysatorphase zu verändern und den Übergang der organischen Reaktanten in die Katalysatorlösung und den des wasserlöslichen Katalysatorsystems in die organische Phase zu begünstigen.

Die wäßrige, Rhodiumkomplex enthaltende Lösung wird mit dem wasserlöslichen Salz einer Carbonsäure mit 7 bis 22, insbesondere 8 bis 13 Kohlenstoffatomen im Überschuß, bezogen auf Rhodium versetzt.

Hierunter fallen Salze aliphatischer, cycloaliphatischer, aromatischer und/oder araliphatischer Carbonsäuren. Gut geeignet sind Salze von Monocarbonsäuren der aliphatischen, cycloaliphatischen, aromatischen und/oder araliphatischen Reihe, insbesondere Salze verzweigter aliphatischer Monocarbonsäuren und bevorzugt Salze der 2-Ethylhexansäure, der Isononansäure (hergestellt durch Hydroformylierung von Diisobutylen und nachfolgende Oxidation des Hydroformylierungsproduktes) und/oder der Isotridecansäure (hergestellt durch Hydroformylierung von Tetrapropylen und nachfolgende Oxidation des Hydroformylierungsproduktes). Ferner haben sich auch Salze der Phenylessigsäure und der α- und β-Naphthoesäure als brauchbar erwiesen.

Als wasserlösliche Carbonsäuresalze werden deren Alkali- und/oder Ammoniumsalze, insbesondere Natrium- und/oder Kaliumsalze, bevorzugt Natriumsalze verwendet.

Je g-Atom Rhodium werden der wäßrigen Lösung 10 bis 500, insbesondere 30 bis 300, bevorzugt 50 bis 200 mol Carbonsäuresalz zugesetzt.

Man kann das erfindungsgemäße Verfahren entsprechend einer besonderen Variante in einer einzigen Stufe durchführen, wobei die wäßrige Lösung gleichzeitig mit Wasserstoffperoxid oder der Wasserstoffperoxid bildenden Substanz und Sauerstoff oder dem sauerstoffhaltigem Gas behandelt wird. Die mittels dieses einstufigen Verfahrens erzielbaren Rhodiumrückgewinnungsresultate lassen sich häufig durch ein zweistufiges

Verfahren noch verbessern. Dieses zweistufige Verfahren sieht vor, die wäßrige Lösung in einer ersten Stufe bei 20 bis 100°C mit Wasserstoffperoxid oder der Wasserstoffperoxid bildenden Substanz und in einer zweiten Stufe bei 80 bis 120°C mit Sauerstoff oder dem sauerstoffhaltigem Gas zu behandeln.

Das Wasserstoffperoxid kann als 30%ige wäßrige Lösung, aber auch in verdünntem Zustand, mit einem Gehalt von beispielsweise 3% eingesetzt werden.

Anstelle von Wasserstoffperoxid können auch Wasserstoffperoxid bildende Stoffe wie anorganische Peroxide, Persulfate und Peroxodisulfate verwendet werden.

Um unabhängig von der Konzentration der jeweils als Oxidans verwendeten Wasserstoffperoxidlösung gleichbleibende Ergebnisse zu erreichen, muß man je Äquivalent oxydable Substanz die gleiche absolute Menge Wasserstoffperoxid einsetzen. Ferner ist darauf zu achten, daß die Wasserstoffperoxidmenge je kg (wäßrige Rhodiumkomplex enthaltende Lösung + eingesetzte Wasserstoffperoxidlösung) gleich groß ist. Unter diesen Voraussetzungen lassen sich ungeachtet der Konzentration der als Oxidationsmittel verwendeten Wasserstoffperoxidlösung vergleichbare Ergebnisse erzielen.

Dies bedeutet, daß bei Gebrauch einer 30%igen Wasserstoffperoxidlösung eine entsprechend verdünnte, Rhodiumkomplex enthaltende Lösung zum Einsatz gelangen kann, während bei Verwendung einer 3%igen Wasserstoffperoxidlösung das zu oxidierende Substrat entsprechend weniger Wasser enthalten soll, also die gelösten Stoffe in höherer Konzentration vorliegen.

Aus Gründen einfacher Handhabung und erhöhter Sicherheit wird man einer 3%igen Wasserstoffperoxidlösung gegenüber einem hochkonzentrierten Wasserstoffperoxid den Vorzug geben.

Man kann die zu oxidierende, wäßrige Lösung zunächst auf die vorgegebene Temperatur erhitzen und anschließend das Wasserstoffperoxid in einer oder mehreren Portionen unter Rühren zudosieren. Es ist auch möglich, nach einer bevorzugten Variante, das Wasserstoffperoxid der zu oxidierenden wäßrigen Lösung bereits bei Raumtemperatur zuzugeben und anschließend die mit Wasserstoffperoxid versetzte, zu oxidierende wäßrige Lösung unter Rühren auf die vorgegebene Temperatur zu erwärmen.

Bei Temperaturen oberhalb 60°C verläuft die Umsetzung recht schnell. Sie ist üblicherweise innerhalb von 5 bis 40 Minuten weitgehend abgeschlossen. Wendet man niedrige Temperaturen an, so ist die Reaktionszeit entsprechend zu verlängern.

Als besonderer Vorteil ist anzusehen, daß es generell nicht erforderlich ist, bereits abgeschiedenes Rhodium sofort aus dem Prozess zu entfernen. Somit ist es möglich, entweder einstufig zu arbeiten oder die zweite Stufe der Rhodiumrückgewinnung unmittelbar an die erste Stufe anzuschließen, indem man in die gegebenenfalls noch Wasserstoffperoxid enthaltende Lösung unter Rühren Sauerstoff oder das sauerstoffhaltige Gas einleitet. Besonders einfach gestaltet sich das Verfahren durch Verwendung von Luft als sauerstoffhaltigem Gas.

Die Temperatur in der zweiten Stufe beträgt 80 bis 120°C. Will man besonders schonend arbeiten, so wählt man eine niedrige Temperatur, erfordert die aufzuarbeitende Lösung schärfere Bedingungen, so erhöht man die Temperatur.

Es hat sich in vielen Fällen bewährt, in der ersten Stufe bei 30 bis 100, insbesondere 50 bis 100, bevorzugt 60 bis 100°C und in der zweiten Stufe bei 85 bis 115, insbesondere 90 bis 110, bevorzugt 95 bis 105°C zu arbeiten.

Das erfindungsgemäße Verfahren läßt sich sowohl unter Normaldruck als auch unter Überdruck durchführen. Der Druck beträgt 0,1 bis 2,0 MPa.

Um das Rhodium möglichst vollständig zurückzugewinnen, muß das Oxidationsmittel (Wasserstoffperoxid sowie Sauerstoff) der aufzuarbeitenden Lösung in ausreichender Menge zugesetzt werden. Als Maß für den jeweiligen Oxidationsmittelbedarf ist die Menge aller oxydablen Stoffe, d.h. Rhodiumkomplex, freier Komplexligand, oxidierbare Zerfallsprodukte sowie gegebenenfalls noch vorhandene organische Substanzen (beispielsweise Olefine, Aldehyde, aldehydische Kondensationsprodukte), die sich oxidieren lassen und den Oxidationsmittelbedarf entsprechend erhöhen, anzusetzen.

Da nicht in jedem Falle die Summe aller oxidierbaren Stoffe genau bekannt ist, empfiehlt es sich, den Bedarf an Wasserstoffperoxid und Sauerstoff oder sauerstoffhaltigem Gas in einem Vorversuch zu bestimmen. Hierfür genügt in der Regel bereits eine Menge von wenigen Gramm der wäßrigen Rhodiumkomplex enthaltenden Lösung.

Üblicherweise setzt man je Mol freien und gebundenen Komplexliganden (hierzu zählen die P(III)-Verbindungen insbesondere die Salze mono-, di- und trisulfonierter Phosphine) 0,5 bis 5 Mol Wasserstoffperoxid und 50 bis 2000 l Luft/h ein. Enthält das zu behandelnde Substrat noch andere oxydable Stoffe, so kann sich der Wasserstoffperoxidbedarf entsprechend erhöhen.

In den meisten Fällen hat es sich bewährt, je Mol freien und gebundenen Komplexliganden 0,8 bis 3, insbesondere 1,2 bis 2,6, bevorzugt 1,8 bis 2,2 Mol Wasserstoffperoxid und 70 bis 1500, insbesondere 100 bis 1300 l Luft/h anzuwenden.

Die waßrige, Rhodiumkomplexverbindungen enthaltende Lösung soll einen pH-Wert von 4 bis 8, insbesondere 5 bis 7,5, bevorzugt 5,5 bis 7 aufweisen. Zu hohe oder zu niedrige pH-Werte wirken sich auf die Rhodiumrückgewinnung negativ aus. Daher sollte der pH-Wert während der Oxidation überwacht und erforderlichenfalls nachreguliert werden.

Besonders vorteilhaft ist es, die abgeschiedene, wasserunlösliche Rhodiumverbindung mittels eines geeigneten Lösungsmittels abzutrennen. Für diese Extraktion eignen sich wasserunlösliche organische Solventien wie Benzol, Toluol, Xylol, Cyclohexan, aliphatische Carbonsäuren und Carbonsäureester sowie Ketone mit 5 bis 10 C-Atomen.

Besonders hervorzuheben sind Xylol und Toluol, wobei insbesondere Toluol zu empfehlen ist.

Man kann das Lösungsmittel sowohl vor Durchführung der ersten Stufe als auch vor der der zweiten Stufe zusetzen. Am einfachsten gestaltet sich die erfindungsgemäße Arbeitsweise durch Zusatz des Lösungmittels nach Beendigung der Oxidation.

Die Extraktion der abgeschiedenen Rhodiumverbindung erfolgt bei 10 bis 100, insbesondere 30 bis 70, bevorzugt 40 bis 60°C.

Durch des erfindungsgemäßen Verfahrens kann man etwa 94 bis 98% des ursprünglich vorhandenen Rhodiums aus der wäßrigen Lösung abgetrennen.

Die nachfolgenden Beispiele sollen die Erfindung näher beschreiben, ohne die Erfindung auf die Beispiele zu beschränken.

## Experimenteller Teil

Zur Durchführung der Versuche setzt man die in Tabelle 1 aufgeführten drei wäßrigen Lösungen A, B und C, die bereits das Carbonsäuresalz (Na-2-ethylhexanoat) und Carbonsäure (2-Ethylhexansäure) enthalten, ein.

Man legt 700 g (Beispiel 1 bis 4 und 7 bis 13) bzw. 500 g (Beispiel 5 und 6) wäßrige Lösung zusammen mit der aus Tabelle 2 zu entnehmenden Menge Wasserstoffperoxid in einen 1 Liter Glasautoklaven, der eine Mantelheizung besitzt, vor. Wasserstoffperoxid gelangt als 3%ige wäßrige Lösung zum Einsatz, ausgenommen sind die Vergleichsversuche 5 und 6, in denen eine 30%ige wäßrige Wasserstoffperoxidlösung verwendet wird.

Unter kräftigem Rühren (500 Umdrehungen pro Minute) erwärmt man innerhalb von 40 Minuten auf 98°C (Ausnahme Beispiel 13 : innerhalb von 30 Minuten auf 88°C) und leitet bei 100°C (Beispiel 13 : bei 90°C) entsprechend den aus Tabelle 2 zu entnehmenden Angaben Luft ein.

Im Vergleichsversuch 11 wird nicht Luft, sondern $N_2$ verwendet.

Mit Hilfe eines Druckregelventils wird der in Tabelle 2 ausgewiesene Druck für die Gaseinleitung eingestellt und die Reaktion nach der in Tabelle 2 ausgewiesenen Zeit beendet. Anschließend kühlt man den Inhalt des Glasautoklavens auf etwa 80°C ab, unterbricht die Luftzufuhr, entspannt, versetzt das Reaktionsgemisch mit 100 g Toluol, läßt unter Rühren auf etwa 70°C abkühlen und trennt die Rhodium enthaltende, toluolische Phase von der Wasserphase. Die Extraktion wird mit 100 g Toluol bei etwa 40°C wiederholt. Die Toluolphasen beider Extraktionen werden vereint.

In der wäßrigen Phase befinden sich die in Tabelle 2 ausgewiesenen Rhodiummengen (Spalte : Rh-Gehalt)

Die nachfolgende Tabelle 1 enthält die Analysendaten der drei wäßrigen Lösungen A, B und C. In Tabelle 2 sind die Versuchsbedingungungen und Resultate zusammengestellt. Die Versuche 1, 2 und 7 bis 9 sowie 12 und 13 sind Beispiele für die erfindungsgemäße Arbeitsweise, die Versuche 3 bis 6 sowie 10 und 11 dienen als Vergleichsversuche.

Tabelle 1

| wäßrige Lösung | Lösung A | Lösung B | Lösung C |
|---|---|---|---|
| Rh (ppm) | 114,0 | 115,0 | 86,3 |
| P(III) | 57,7 mmol/kg | 26,0 mmol/kg | 19,5 mmol/kg |
| Na-2-ethyl-hexanoat | 166,7 mmol/kg | 167,6 mmol/kg | 125,7 mmol/kg |
| 2-Ethylhexan-säure | 22,2 mmol/kg | 22,3 mmol/kg | 16,8 mmol/kg |
| Salzgehalt (Gew.-%) | ~ 9 | ~16 | ~12 |
| | | | |
| Zusammen-setzung (Gew.-%) | | | |
| TPPTS | 3,18 | 1,27 | 0,955 |
| TPPOTS | 1,59 | 2,99 | 2,24 |
| TPPDS | 0,13 | 0,06 | 0,04 |
| TPPODS | 0,18 | 0,40 | 0,30 |
| BSNS | 0,50 | 1,70 | 1,28 |

In der obigen Tabelle bedeuten:

TPPTS: $Na_3$-Triphenylphosphintrisulfonat

TPPOTS: $Na_3$-Triphenylphosphinoxidtrisulfonat

TPPDS: $Na_2$-Triphenylphosphindisulfonat

TPPODS: $Na_2$-Triphenylphosphinoxiddisulfonat

BSNS: Na-Benzolsufonat

Tabelle 2

| Versuch | Lösung | $H_2O_2$ | T | $O_2$ | t | P | Rh-Gehalt |
|---|---|---|---|---|---|---|---|
| 1 | A | 2,0 | 100 | 200 | 2 | 0,25 | 1,9 |
| 2 | A | 2,0 | 100 | 200 | 6 | 0,25 | 1,3 |
| 3 | A | - | 100 | 200 | 6 | 0,25 | 18,1 |
| 4 | A | - | 100 | 1000 | 6 | 0,25 | 8,9 |
| 5 | A | 80 | 100 | - | 1 | 0,20 | 9,3 |
| 6 | A | 80 | 100 | - | 6 | 0,20 | 7,7 |
| 7 | B | 2,2 | 100 | 1240 | 6 | 0,20 | 3,5 |
| 8 | C | 2,2 | 100 | 440 | 4 | 0,20 | 2,8 |
| 9 | C | 2,2 | 100 | 132 | 6 | 0,20 | 2,9 |
| 10 | C | 2,2 | 100 | - | 5 | 0,20 | 27,9 |
| 11 | C | 2,2 | 100 | 1320 $N_2$ | 6 | 0,20 | 26,3 |
| 12 | B | 1,8 | 100 | 440 | 4 | 0,25 | 2,4 |
| 13 | B | 2,2 | 90 | 440 | 6 | 0,25 | 3,7 |

Lösung : Vergleiche Tabelle 1

$H_2O_2$ : Mol $H_2O_2$/Mol P(III)

T : Reaktionstemperatur in °C nach Aufheizen

$O_2$ : Liter Luft/Stunde x Mol P(III)

Rh-Gehalt im Abwasser in % vom Einsatz

t : Reaktionszeit in Stunden gerechnet ab Erreichen der Reaktionstemperatur T

P : Reaktionsdruck ab Erreichen der Reaktionstemperatur in MPa

## Patentansprüche

1. Verfahren zur Rückgewinnung von Rhodium aus Rhodiumkomplexverbindungen und gegebenenfalls Komplexliganden enthaltenden wäßrigen Lösungen, durch Behandlung der Lösung mit einem Oxidationsmittel in Gegenwart eines wasserlöslichen Salzes einer Carbonsäure mit 7 bis 22 Kohlenstoffatomen im Überschuß, bezogen auf Rhodium, und Abtrennung des Rhodiums als eine im Wasser unlösliche Verbindung, dadurch gekennzeichnet, daß die wäßrige Lösung bei 20 bis 120°C mit Wasserstoffperoxid oder einer Wasserstoffperoxid bildenden Substanz und mit Sauerstoff oder einem sauerstoffhaltigem Gas behandelt wird.

2. Verfahren nach Anspruch 1 dadurch gekennzeichnet, daß die wäßrige Lösung gleichzeitig mit Wasserstoffperoxid oder der Wasserstoffperoxid bildenden Substanz und mit Sauerstoff oder dem sauerstoffhaltigen Gas behandelt wird.

3. Verfahren nach Anspruch 1, dadurch gekennzeichnet, daß die waßrige Lösung bei 20 bis 100°C mit Wasserstoffperoxid oder der Wasserstoffperoxid bildenden Substanz und bei 80 bis 120°C mit Sauerstoff oder dem sauerstoffhaltigen Gas behandelt wird.

4. Verfahren nach einem oder mehreren der Ansprüche 1 bis 3, dadurch gekennzeichnet, daß je Mol freien und gebundenen Komplexliganden 0,5 bis 5 Mol Wasserstoffperoxid und als sauerstoffhaltiges Gas 50 bis 2000l Luft/h eingesetzt werden.

5. Verfahren nach einem oder mehreren der Ansprüche 1 bis 4, dadurch gekennzeichnet, daß je Mol freien und gebundenen Komplexliganden 0,8 bis 3,0, insbesondere 1,2 bis 2,6, bevorzugt 1,8 bis 2,2 Mol Wasserstoffperoxid und 70 bis 1500, insbesondere 100 bis 1300 l Luft/h eingesetzt werden.

6. Verfahren nach einem oder mehreren der Ansprüche 1 bis 5 dadurch gekennzeichnet, daß in der wäßrigen Lösung ein pH-Wert von 4 bis 8, insbesondere 5 bis 7,5, bevorzugt 5,5 bis 7,0 eingehalten wird.

7. Verfahren nach einem oder mehreren der Ansprüche 1 bis 6, dadurch gekennzeichnet, daß die wasserunlösliche Rhodiumverbindung mit einem wasserunlöslichen organischen Lösungsmittel extrahiert wird.

8. Verfahren nach Anspruch 7, dadurch gekennzeichnet, daß als organisches Lösungsmittel Toluol oder Xylol, insbesondere Toluol eingesetzt wird.

## Claims

1. A process for recovering rhodium from aqueous solutions containing rhodium complex compounds and optionally complex ligands by treatment of the solution with an oxidant in the presence of a water-soluble salt of a carboxylic acid with 7 to 22 carbon atoms in excess, related to the rhodium, and separation of the rhodium as a water-insoluble compound, characterised in that the aqueous solution is treated at 20 to 120°C with hydrogen peroxide or a substance forming hydrogen peroxide and with oxygen or an oxygen-containing gas.

2. A process according to claim 1, characterised in that the aqueous solution is treated simultaneously with hydrogen peroxide or the substance forming hydrogen peroxide and with oxygen or the oxygen-containing gas.

3. A process according to claim 1, characterised in that the aqueous solution is treated at 20 to 100°C with hydrogen peroxide or the substance forming hydrogen peroxide and at 80 to 120°C with oxygen or the oxygen-containing gas.

4. A process according to one or more of the claims 1 to 3, characterised in that 0.5 to 5 moles of hydrogen peroxide and as an oxygen-containing gas 50 to 2000 litres of air per hour are used per mole of free and bound complex ligands.

5. A process according to one or more of the claims 1 to 4, characterised in that 0.8 to 3.0 moles, in particular 1.2 to 2.6 and preferably 1.8 to 2.2 moles of hydrogen peroxide and 70 to 1500, in particular 100 to 1300 litres of air per hour are used per mole of free and bound complex ligands.

6. A process according to one or more of the claims 1 to 5, characterised in that a pH value of 4 to 8, in particular 5 to 7.5, preferably 5.5 to 7.0 is maintained in the aqueous solution

7. A process according to one or more of the claims 1 to 6, characterised in that the water-insoluble rhodium compound is extracted with a water-insoluble organic solvent.

8. A process according to claim 7, characterised in that toluene or xylene, in particular toluene, is used as an organic solvent.

## Revendications

1. Procédé pour récupérer le rhodium à partir de solutions aqueuses contenant des complexes de ce métal et, le cas échéant des ligands des complexes, par traitement de la solution a l'aide d'un agent oxydant en présence d'un sel hydrosoluble d'un acide carboxylique en $C_7$-$C_{22}$ en excès par rapport au rhodium et séparation du rhodium à l'état de composé insoluble dans l'eau, caractérisé en ce que l'on traite la solution aqueuse à des températures de 20 à 120°C par le peroxyde d'hydrogène ou une substance formant du peroxyde d'hydrogène et par l'oxygène ou un gaz contenant de l'oxygène.

2. Procédé selon la revendication 1, caractérisé en ce que l'on traite la solution aqueuse simultanément par le peroxyde d'hydrogène ou la substance formant le peroxyde d'hydrogène et par l'oxygène ou le gaz contenant de l'oxygène.

3. Procédé selon la revendication 1, caractérisé en ce que l'on traite la solution aqueuse à une température de 20 à 100°C par le peroxyde d'hydrogène ou la substance formant du peroxyde d'hydrogène et à une température de 80 à 120°C par l'oxygène ou le gaz contenant de l'oxygène.

4. Procédé selon une ou plusieurs des revendications 1 à 3, caractérisé en ce que l'on utilise de 0,5 à 5 mol de peroxyde d'hydrogène et, en tant que gaz contenant de l'oxygène, l'air en quantité de 50 à 2000 l/h par mole de ligands de complexes libres et combinés.

5. Procédé selon une ou plusieurs des revendications 1 à 4, caractérisé en ce que l'on utilise de 0,8 à 3,0, plus spécialement de 1,2 à 2,6, de préférence de 1,8 à 2,2 mol de peroxyde d'hydrogène et de 70 à 1500, plus spécialement de 100 à 1300 l d'air/heure par mole de ligands de complexes libres et combinés.

6. Procédé selon une ou plusieurs des revendications 1 à 5, caractérisé en ce que l'on maintient dans la solution aqueuse un pH de 4 à 8, plus spécialement de 5 à 7,5, et de préférence de 5,5 à 7,0.

7. Procédé selon une ou plusieurs des revendications 1 à 6, caractérisé en ce que l'on extrait le composé de rhodium insoluble dans l'eau par un solvant organique insoluble dans l'eau.

8. Procédé selon la revendication 7, caractérisé en ce que le solvant organique utilisé est le toluène ou le xylène, plus spécialement le toluène.